# EUROPEAN PATENT APPLICATION

(11) **EP 2 204 748 A1**
(43) Date of publication of application: **07.07.2010**
(21) Application number: 09180776.8
(22) Date of filing: 24.12.2009
(51) Int. Cl.: G06F 17/30

(54) **Method and apparatus for advertising at the sub-asset level**

(30) Priority: 24.12.2008 US 343786
(71) Applicant: Comcast Interactive Media, LLC, Philadelphia, Pennsylvania 19103 (US)
(72) Inventor: Hounsell, Randall, Philadelphia, PA 19146 (US)
(74) Representative: Watterson, Peer Marten John

(57) **Abstract**

The invention pertains to methods, systems, and apparatus for enabling advertisers to identify and purchase advertising as a function of subject matter, particularly, although not necessarily, at the sub-asset level and according to an ontology particularly adapted to the interests of advertisers in media. In accordance with certain aspects of the invention, advertising may be sold at the sub-asset level, rather than at the asset level. In accordance with other aspects of the invention, a system is provided that permits advertisers to search media items for advertising opportunities, including the ability to browse through an ontology specifically adapted to the purpose of identification of advertising opportunities within media. Even further, in accordance with other aspects of the invention, a search engine is provided to facilitate searching for advertising opportunities within multimedia content using keyword searching and faceted searching of the ontology and the like. The invention also can be used for identifying media items for purposes unrelated to advertising.

## Description

### Field of the Invention

The invention pertains to information retrieval and classification as well as advertising. More particularly, the invention pertains to providing a system by which advertisers can purchase advertising time or space within media assets at the sub-asset level.

### Background of the Invention

As is well-known, advertisers often purchase advertising within particular television programs, radio programs, podcasts, Websites, videos and the like based on the subject matter of the program, podcast or Website, and not just the number of viewers likely to watch the program. Specifically, advertisers commonly are interested in a particular demographic of viewers that can range from the very broad to the extremely narrow. For instance, a producer of beer might be interested in a demographic as broad as male viewers aged 18-45, whereas a producer of sports drinks may be interested in viewers aged 18-45 that are interested in sports programming. Finally, a producer of surfboards might be interested in viewers aged 18-30 specifically interested in the sport of surfing. The subject matter of a media item often has a very high correlation to a specific demographic. Therefore, the producer of surfboards may be much more interested in placing its advertisement in the middle of media such as a television program or webpage relating to a surfing competition rather than a situation comedy (sitcom), even though the sitcom may have a much larger likely viewing audience. A great deal of effort is expended by television programmers, Website operators, media content creators, and advertisers in determining what television programs and other media assets appeal to particular demographics for advertisement placement purposes. Directing advertisements to specific demographic segments is known as targeted advertising.

The amount of media content available for consumption is increasing exponentially. "Media" refers to the forms in which content may be transmitted. Presently, the most common transmitted media are audio (e.g., music, speech) and visual (photographs, drawings, motion pictures, web pages, animation). These media are typically represented in electronic formats, such as, for example, HTTP, NNTP, UDP, JMS, TCP, MPEG, MP3, wave files, HTML, JPEG, TIFF, and PDF. As transmission technologies become more advanced, however, transmitted media will likely involve other sensory data such as taste, smell, and touch.

In addition, television programming and other multimedia are increasingly being made available through mechanisms other than conventional broadcasting. For instance, Video-On-Demand (VOD) is a very popular service offered by many subscription television service providers. Video-On-Demand is a service by which subscribers may choose programs from a menu for viewing at a time of each individual subscriber's choosing. A subscriber simply selects a program for viewing from a menu of programs that are available for viewing. The program, which is stored in memory at the headend or another server-side node of the network is then streamed to the subscriber's set top box immediately for viewing at that time. Also, a great deal of media, including television programs, is now consumed completely outside of the traditional paradigm of television. Persons now commonly consume a large portion of their multimedia content via the internet through Web sites such as youtube.com and myspace.com. Other websites offer traditional television programs for viewing through the internet. Services are now available for receiving television through portable wireless consumer devices, such as cellular telephones and PDAs (personal Digital Assistants).

As both the volume and specificity of media content increases, it is expected that consumers will increasingly consume media assets at the sub-asset level. That is, for instance, rather than watching an entire baseball game (a media asset), a consumer may watch only the parts where the team that he roots for is at bat or may only watch a highlight reel of the game (a sub-asset level segment). In another example, a viewer may view only the light saber fight scenes from the Star Wars movie series.

### Summary of the Invention

The invention pertains to methods, systems, and apparatus for enabling advertisers to identify and purchase advertising as a function of subject matter, particularly, although not necessarily, at the sub-asset level and according to an ontology particularly adapted to the interests of advertisers. In accordance with certain aspects of the invention, advertising may be sold at the sub-asset level, rather than at the asset level. In accordance with other aspects of the invention, a system is provided that permits advertisers to search media items for advertising opportunities, including the ability to browse through an ontology specifically adapted to the purpose of identification of advertising opportunities within media items. Even further, in accordance with other aspects of the invention, a search engine is provided to facilitate searching for advertising opportunities within media content using keyword searching and faceted searching through the ontology. The invention also can be used for purposes unrelated to advertising.

### Brief Description of the Drawings

Figure 1 is a diagram illustrating conceptual components of a system in accordance with an embodiment of the present invention.

Figure 2 is a diagram further illustrating conceptual components of a system incorporating the present invention and their interrelationships and uses.

Figure 3 is a flow diagram illustrating operation in accordance with one aspect of the present invention.

### Detailed Description of the Invention

The invention provides a system, including a method and an apparatus, for facilitating targeted advertising, especially at the sub-asset level and especially in association with media content, such as television programming, radio programming, podcasting, Websites, etc.

The following list of definitions of terms used in this specification may be useful prior to a detailed discussion of the invention.

"Content" refers broadly to the information contained in the signal transmitted, and includes, for example, entertainment, news, and commercials.

"Subject matter" or "contextual information" refers broadly to the subject matter or theme of the content and can be virtually anything within the realm of human knowledge, such as baseball, strike out, fast ball, stolen base, mountains, scary, happy, George Carlin, nighttime.

"Set top box" or STB refers to a device that connects to a monitor and an external source of signal, converting the signal into content for display/transmission over the monitor. The signal source might be an Ethernet cable, a satellite dish, a coaxial cable , a fiber optic cable, a telephone line (including DSL connections), Broadband over Power Line, or even an ordinary antenna. The STB may have several different embodiments. For example, it may be a special digital STB for delivering digital content on TV sets that do not have a built in digital tuner. The STB may also descramble premium channels. A STB may be a cable converter box to receive digital cable TV channels and convert them to analog for non-digital TVs. In the case of direct broadcast satellite (mini-dish) systems such as SES Astra^{®}, Dish Network^{®}, or DirecTV^{®}, the STB is an integrated receiver/decoder (or IRD). In internet packet (IP) TV networks, the STB is a small computer providing two-way communications on an IP network, and decoding the video streaming media which eliminates the need for any coaxial cabling. The STB may be a discrete unit or its functionality may be incorporated into other components of the user's system such as the monitor, TV, DVR, residential gateway, or personal computer. For example, the STB may be a portable, modular unit (i.e., a personal STB) or it may be integrated into a stationary TV system. The STB may contain one or more digital processors or may use the processing capabilities of the other system components (e.g., TV, DVR, personal computer). Additionally, rather than having its own tuner, the STB may use the tuner of a television.

"Information network" refers to a collection of devices having a transport mechanism for exchanging information or content between the devices. Such networks may have any suitable architecture, including, for example, client-server, 3-tier architecture, N-tier architecture, distributed objects, loose coupling, or tight coupling.

The invention may comprise and/or depend upon a number of technologies and components, some examples of which are the subject of co-pending patent applications owned by the same assignee as the present application, including U.S. Patent Application No. 12/343,779 (Attorney Docket No. 2008011564) entitled Identification of Segments Within Video, Audio, and Multimedia Items and U.S. Patent Application No. 12/343,790 (Attorney Docket No. 2008011563) entitled Method and Apparatus for Organizing Segments of Media Assets and Determining Relevance of Segments to a Query filed on even date herewith and owned by the same assignee as the present application, and which are incorporated herein fully by reference. The specific technologies disclosed in those patent application are merely exemplary implementations and not limiting, and do not necessarily comprise a component of the present invention itself.

Media items are typically offered by programmers and network operators in generally predefined portions herein termed "assets" or "documents." For instance television programs such as dramas, soap operas, reality shows, and sitcoms are typically broadcast in asset level units known as episodes that commonly are a half hour or an hour in length (including advertisements). Sporting events are broadcast in asset units of a single game. Music videos are commonly offered in asset units corresponding to a complete song or a complete concert performance.

In the television arts, professionals on the business side of the art refer to these as "assets", whereas professionals on the research and technology side of the art often refer to them as "documents". In any event, the concept of an "asset" or "document" is well understood in the industry as well as among content consumers (although consumers may not be familiar with the term "asset" or "document," they are familiar with the concept). For instance, a typical television guide printed in a newspaper or the electronic program guides commonly provided by a subscriber-based television network are well known to virtually all television viewers and generally list multimedia content at the asset level.

In any event, a media asset typically can conceptually be broken down into a plurality of segments at the sub-asset level, each having a cohesive subject or theme. "Subject matter" or "contextual information" refers broadly to the subject matter or theme of the content and can be virtually anything within the realm of human knowledge, such as baseball, strike out, fast ball, stolen base, mountains, scary, happy, George Carlin, nighttime, cool, winner. The nature and duration of each segment will depend, of course, on the particular ontology used for purposes of segmentation as well as on the particular content of each program. "Content" refers broadly to the information contained in the signal transmitted, and includes, for example, entertainment, news, and commercials. For instance, most stage plays, and motion pictures readily break down into two or three acts. Each such act can be a different segment. Television programs also can be segmented according to thematic elements. Certain programs, for instance, the television news magazine program 60 Minutes can readily be segmented into different news stories. Other programs, however, can be segmented based on more subtle thematic elements. A baseball game can be segmented by inning or at-bat, for instance. A typical James Bond movie can be segmented into a plurality of action segments, a plurality of dramatic segments, and a plurality of romantic segments. The possibilities for segmentation based on thematic elements is virtually limitless and these are only the simplest of examples.

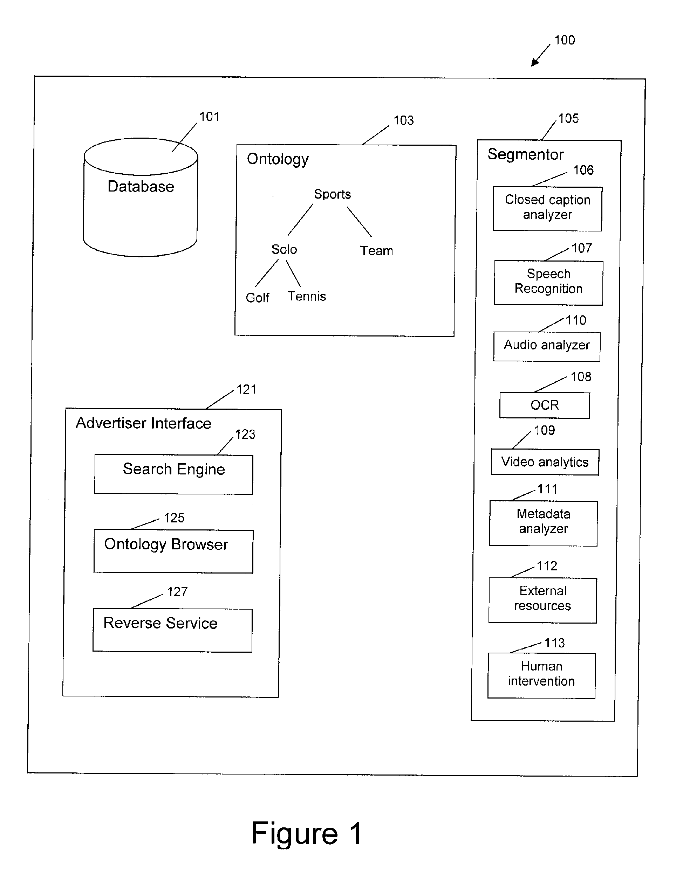

Figure 1 is a diagram illustrating the conceptual components of a system incorporating the present invention. The system 100 includes a database 101 of media segments at the sub-asset level. The database correlates data identifying media segments with data identifying the subject matter of those segments. The assets themselves do not need to be physically separated into distinct files at the sub-asset level. Rather, the database 101 merely should comprise data about the media assets at the sub-asset level. In order to develop such a database 101, an ontology 103 is developed to provide a defined framework for classifying media segments by subject matter. An ontology essentially is a formal representation of a set of concepts within a domain and the relationships between those concepts. It is used to reason about the properties of that domain, and may be used to define the domain. Key elements of an ontology include:
Classes: sets, collections, concepts, types of objects, or kinds of things
Attributes: aspects, properties, features, characteristics, or parameters that objects (and classes) can have
Relations: ways in which classes and individuals can be related to one another
Restrictions: formally stated descriptions of what must be true in order for some assertion to be accepted as input
Rules: statements in the form of an if-then (antecedent-consequent) sentence that describe the logical inferences that can be drawn from an assertion in a particular form

Thus, for instance, "an interception is a turnover" is a relationship. Also, "an interception may happen on a tipped pass" also is a relationship. An example of a restriction is "non-eligible receivers can catch a pass only if it is tipped by a defender". An example of a rule is "plays involving ineligible receivers may be near interceptions" and, therefore, may be closely related to an interception.

In fact, typically, an ontology is developed first in order to structure such a database 101.

In addition to being developed for classifying media assets as a function of subject matter and representing relationships thereof between, the ontology 103 also may be specifically adapted to facilitate the identification of advertising opportunities for advertisers within media segments. Accordingly, the ontology may be adapted as a function of both (1) common types of advertising, including common subject matters of advertising (e.g., the types of products or services commonly advertised), the types of advertising (e.g., humorous, serious, informational, celebrity endorsements, luxury items, discount items, curiosity-peeking, etc.) and (2) any other criteria that one might consider relevant to an advertiser's decision whether to buy advertising space within a particular media segment. For instance, the ontology may include facets for concepts such as "cool" or "winners." Any subject matter that is considered "cool" can be classified under "cool" (as well as under other facets of the ontology). This would make it simpler for advertisers looking for certain types of concepts (such as "cool") that can be associated with widely varied subject matters of media content (e.g., hip-hop, music, skateboarding, Apple™ computers, James Bond).

The ontology can be continuously refined as types of programming, products, services, demographics, etc. are developed or become more refined.

Furthermore, media assets may be segmented and classified according to the ontology. This segmentation process 105 has at least two component functions, namely, identifying cohesive, meaningful segments within assets (e.g., identifying the beginning and end of a meaningful segment having a cohesive subject according to the ontology) and identifying that subject matter. Particularly, identifying keywords or other thematic elements in a media file in order to identify subject matter is only a part of the task. Determining the boundaries (beginning and end) of a contextually cohesive segment is an additional part of the task.

A segmentor 105, which, in a most practical embodiment, comprises a collection of software routines, segments media items, such as media assets, into smaller segments. (The term "media item" is used herein in its broadest sense to refer to any unit of media, including asset, sub-asset, and supra-asset units). Segmentor 105 may utilize various techniques, apparatus, and software for determining the thematic elements (e.g., nature of the content) within media items and partitioning the media items into contextually coherent segments. Of course, it is possible to do this by human effort, e.g., a person watches a multimedia asset and manually takes note of coherent segments and their thematic elements and then enters the information in a database. However, with the sheer volume of media content available today, and which is only likely to increase exponentially in the future, at least some automation of the process would be highly desirable.

Many software systems are available now that are useable in connection with this task. For instance, software 106 is now available that captures the closed caption stream within a media asset and converts it to written text, which could then be analyzed for subject matter information. Further, software 107 is available that analyzes the audio portion of a media stream and converts speech detected in the audio portion (which may then further be analyzed for subject matter). In fact, software 110 is now available that analyzes the audio portion of a media stream to determine additional subject matter information from sounds other than speech. For instance, such software can detect, recognize and distinguish between, for instance, the sound of a crowd cheering or booing, sounds associated with being outdoors in a natural setting, or being outdoors in an urban setting, or being indoors in a factory or an office or a residence, etc. For example, U.S. Patent No. 7,177,861 discloses suitable software for detecting semantic events in an audio stream.

Even further, optical character recognition software 108 can be used to determine text that appears in a scene (as opposed to being audibly spoken). See, e.g. Li, Y. et al. "Reliable Video Clock Recognition," Pattern Recognition, 2006, 1 CPR 2006, 18th International Conference on Pattern Recognition. Such software can be used, for instance, to detect the clock in a timed sporting event. Specifically, knowledge of the game time could be useful in helping determine the nature of a scene. For instance, whether the clock is running or not could be informative as to whether the ball is in play or not during a football game. Furthermore, certain times during a sporting event are particularly important, such as two minutes before the end of a professional football game. Likewise, optical character recognition can be used to determine the names of the actors or other significant persons in a television program or the like simply by reading the credits at the beginning or end of the program.

Furthermore, video analytics software 109 is available that can analyze the visual content of a media stream to determine subject matter, e.g., indoors or outdoors, presence or absence of cars and other vehicles, presence or absence of human beings, presence or absence of non-human animals, etc. In fact, software is available today that can be used to actually recognize specific individuals by analyzing their faces.

Even further, there may be significant metadata contained in a media stream. While some may consider the closed captioning stream to be metadata, we here refer to additional information. Particularly, the makers or distributors of television programs or third party providers sometimes insert metadata into the stream that might be useful in determining the subject matter of an asset or of a segment within an asset. Such metadata may include almost any relevant information, such as actors in a scene, timestamps identifying the beginnings and ends of various segments within a program, the names of the teams in a sporting event, the date and time that the sports event actually occurred, the number of the game within a complete season, etc. Accordingly, the segmentor 105 may also include software 111 for analyzing such metadata.

Even further, companies now exist that provide the services of generating and selling data about television programs and other media. For instance, Stats, Inc. of Northbrook, IL, USA sells such metadata about recorded sporting events. Thus, taking a baseball game as an example, the data may include, for instance, the time that each half inning commenced and ended, data for each at bat during the game, such as the identity of the batter, the times at which the at-bat commenced and ended, the statistics of each player in the game, the score of the game at any given instance, the teams playing the game, etc. Accordingly, another software module 112 can be provided to analyze data purchased or otherwise obtained from external sources, such as Stats, Inc.

Finally, human intervention 113 can be used as needed.

The present invention may rely on any or all of these techniques for determining the subject matter of a media item as well as the beginning and end of coherent segments thereof corresponding to a particular subject matter.

It should be noted that the clarification of media items need not be exclusive in the sense that a given segment may be properly assigned two or more relatively disparate subject matters. For instance, a television program on the History Channel having a portion pertaining to the origination of the sport of golf in Scotland may be classified in the ontology as pertaining to all of (1) history, (2) travel, and (3) sports.

It should be understood, that the example above is simplified for purposes of illustrating the proposition being discussed. In actuality, a segment about the history and origins of golf in Scotland would be classified and sub-classified to multiple levels according to the ontology. For instance, in a robust ontology, this portion would not be merely classified under history, but probably would be further sub-classified under European history, and even further sub-classified under Scottish history, etc. It would further be classified not merely under travel, but probably under travel, then sub-classified under European travel, and then even further sub-classified under Scottish travel, etc. Finally, it also would not merely be classified under sports, but, for instance, under sports and further sub-classified under solo sports, and even further sub-classified under golf.

Furthermore, segments need not necessarily be discrete, i.e., segments may overlap. For instance, the same show on the History Channel mentioned above may start with a segment on Scottish history that evolves into a segment on the origins of golf and that even further evolves into a segment on Scottish dance music. Accordingly, a first segment may be defined as starting at timestamp 5 minutes:11 seconds in the program and ending at timestamp 9m:18s classified under History:European:Scotland. A second segment starting at 7m:39s and ending at 11 m:52s may be classified under Sports:Golf and a third segment starting at 11m:13s and ending at 14m:09s may be classified under Music:Dance:Scottish. In this example, the various segments overlap each other in time.

Furthermore, segments may be of any length, including zero (i.e., a segment may comprise an instant within the media).

A significant component of the invention is software application 121 by which an advertiser can search and/or browse the database of media segments in order to identify segments of interest for inserting advertisements. In one embodiment of the invention, this includes a search engine 123 (e.g., Boolean searching) for searching by keywords. It also may be beneficial to enable advertisers to search by more traditional criteria, such as program titles, time of broadcast, channel of broadcast, etc. Further, advertiser interface software 121 may include a browser application or search engine 125 enabling advertisers to perform faceted searching/browsing of the ontology to locate media assets and segments thereof of interest. In one embodiment, the faceted searching and Boolean searching can be combined. For example, an advertiser can navigate by means of a faceted search through the ontology and select one or more particular subclasses and then perform a keyword search only within those subclasses.

In one embodiment, advertisers can search for and identify intersections and/or unions within the ontology. For instance, an advertiser that sells golf themed vacation packages to Scotland might be very interested in advertising during the previously described segment on the origins and history of golf in Scotland. This advertiser could easily find this segment by locating an intersection of History:European:Scotland and Sports:Solo:Golf within the ontology, for instance.

In at least one embodiment of the invention, in addition to allowing advertisers to conduct their own searching and browsing, a media content provider can also offer a reverse advertising location service 127 in which the advertiser submits its advertisement (or a description of the advertisement or the product/service to be advertised) to the media content provider and the media content provider provides the service of recommending media segments most closely related to that advertisement (or product/service). In one embodiment, the media content provider can simply have an employee review the advertisement and use the aforementioned browse and/or search applications to find suitable media segments to advertise within. The process of determining the nature of an advertisement also can be automated. In fact, many of the same tools used to analyze the subject matter of and partition a media asset (or other media item) into smaller segments for purposes of generating database 101 also can be used to analyze the content of media advertisements to determine the subject matter of the advertisements, e.g., the type of product/service being advertised.

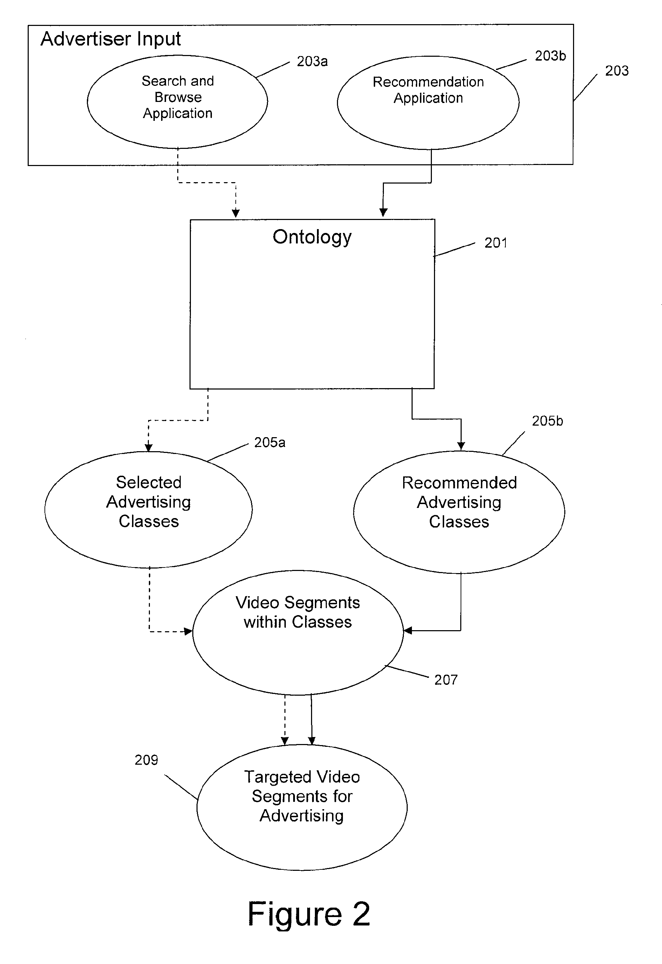

Figure 2 is a diagram illustrating how an advertiser might use the system. In one embodiment of the invention, the functionality illustrated in Figure 2 is made available to advertisers via a secure website that registered advertisers can access using a suitable user ID and password, for instance. Figure 2 illustrates two alternate ways of interfacing with the system. The first way is to manually search and/or browse the ontology to locate suitable advertising space. This way is illustrated by the dashed lines in Figure 2. The second way is to submit a proposed advertisement to a recommendation application, which will return advertising spot recommendations to the advertiser. This way is illustrated by the solid lines in Figure 2.

Thus, the process starts with the advertiser inputting its information, as illustrated by box 203. If the advertiser elects to search through the ontology 201 itself, the advertiser accesses search/browse application(s) 203a. As previously noted, the advertiser may either or both enter keywords in a search window or browse the ontology to navigate to facets of the ontology 201 relevant to the advertiser's interests. In any event, the advertiser identifies class or classes (facets) 205a within the ontology that are of interest to the advertiser. The system then provides the advertiser with a list of the video segments within those classes, as illustrated at 207. The advertiser may then choose a set of video segments 209 from the group of video segments 207 within which it wishes to purchase advertising time.

In one embodiment of the system, the website also provides the functionality necessary to allow the advertiser to purchase and pay for the advertising immediately.

If, on the other hand, the advertiser chooses to use the recommendation application 203b, the advertiser inputs information about its advertisement. This may be done in any number of ways. For instance, the advertiser may fill out a form indicating various aspects of the subject matter of the advertisements, such as the product or service being advertised, the target demographic, etc. Alternately, if the advertisement is already prepared, the advertiser may simply upload the advertisement to the website as a media file. The recommendation application 203b then analyzes the file (or other input information about the advertisement) to determine its subject matter. This may be done using any of the technology discussed above in connection with classifying media according to the ontology. Next, that subject matter information is run through the ontology 201 to generate one or more advertising classes 205b within the ontology relevant to the subject matter of the advertisement.

The rest of the process is essentially the same as described above in connection with the manual search technique. Particularly, the system then presents the advertiser with media segments classified under the recommended advertising classes, as illustrated at 207, and the advertiser chooses media segments 209 within which to purchase advertising space from the group of media segments 207.

While the invention has primarily been described in the context of broadcast television, this is merely exemplary. The invention is equally applicable to an on-demand type of delivery of media content, including, but not limited to, the Internet, Video-On-Demand or Pay-Per-View programming on subscriber-based television networks, podcasts, and broadcast radio, either at the asset level or the sub-asset level. For instance, when a user requests a particular media segment, e.g., a given scene within a movie, the system simultaneously issues a request for the media segment and the advertisement content. Results are returned responsive to both requests and assembled so as to deliver to the user both the requested media segment and the advertisement.

The invention may be applied in any situation where a provider of media content offers space or time within that content. Although advertising is seen as the most common application of the invention, it can be applied to any situation in which one wishes to identify a media segment pertaining to a specific subject matter. Merely as one example, one may wish to insert one media item of similar subject matter within a media item identified in accordance with the invention to form a compilation. In fact, it is not even necessary that the invention be used to insert one media item into another. The invention may be used, for instance, to associate two media items with each other for purposes of creating a playlist that includes the two segments (among others). In other embodiments, the invention can be used in connection with the insertion of e-commerce or T-commerce spots within media. That is, rather than inserting a strict advertisement into a media item, one may insert an actual opportunity to purchase something. This is readily possible on the Web or in connection with interactive television.

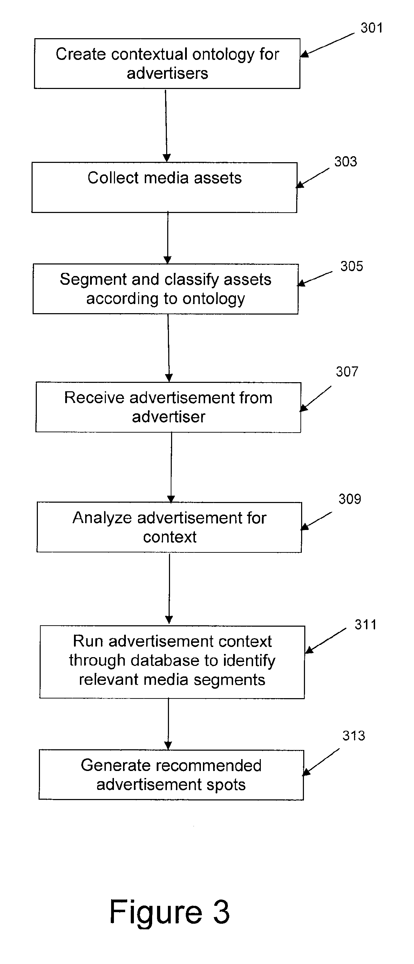

Figure 3 is a flow diagram providing an overview of flow through a system in accordance with the principles of the present invention. The flow chart of Figure 3 is drawn specifically to an exemplary embodiment of a cable television network operator that provides the service to its advertisers of finding appropriate media content to advertise within at the sub-asset level. However, this is merely exemplary.

In step 301, the operator creates an ontology that is specifically adapted to serve the needs and wishes of advertisers interested in advertising during television programming. In step 303, the operator collects its media assets that are to be made available for advertising against. In step 305, those assets are analyzed by the segmentor 105 in accordance with the ontology 103 to break them down into coherent sub-asset level segments classified according to the ontology. In step 307, the operator receives a particular advertisement or information about an advertisement from a potential advertiser. In step 309, the operator analyzes the advertisement to determine its subject matter within the ontology 103. As previously noted, this can be done manually by a human or can be done automatically using the same tools use in the process of segmenting and classifying the media assets.

In step 311, the subject matter information about the advertisement is run through the media segment database to locate media sub-segments with subject matter similar to the subject matter of the advertisement. In step 313, the operator provides the advertiser with a list of recommended media segments within which the advertiser may wish to run its advertisement.

While the invention has been described in connection with a particular embodiment in which media assets are segmented into sub-asset level segments, this is merely exemplary. The initial item of media that is segmented in accordance with the principles of the invention can be any portion of media. The term "item" as used herein in connection with terms such as media item is use broadly to encompass any piece of media that can be segmented into smaller media items.

Having thus described a few particular embodiments of the invention, various alterations, modifications, and improvements will readily occur to those skilled in the art. Such alterations, modifications, and improvements as are made obvious by this disclosure are intended to be part of this description though not expressly stated herein, and are intended to be within the spirit and scope of the invention. Accordingly, the foregoing description is by way of example only, and not limiting. The invention is limited only as defined in the following claims and equivalents thereto.

There follows a selection of a number of features relating to one or more embodiments of the invention. Where a numbered feature refers to an earlier numbered feature, then all of the elements of that earlier feature are understood to be included within the referring feature. Applicant gives notice that it reserves the right to claim any of the below features, either singularly or in combination.

### FEATURES

1. A method of identifying media segments based on a subject matter of media content of the segments, the method comprising the steps of:
   (1) providing an ontology for classifying media according to a subject matter of the media content;
   (2) segmenting a media item into media segments as a function of subject matter in accordance with the ontology and classifying the segments within the ontology; and
   (3) enabling searching of the media segments within the ontology for media segments pertaining to a specific subject matter.
2. The method of feature 1 further comprising the steps of:
   (4) enabling a user to select a media segment identified in step (3); and
   (5) enabling association of another media item with the selected media segment.
3. The method of feature 2 wherein step (5) comprises inserting the other media item within the selected media segment.
4. A method of providing advertising opportunities within media assets at a sub-asset level, the method comprising the steps of:
   (1) creating an ontology for classifying media according to a subject matter of the media content;
   (2) segmenting the media assets into media segments as a function of subject matter in accordance with the ontology and classifying the segments within the ontology; and
   (3) enabling advertisers to search the media segments within the ontology for media segments pertaining to a specific subject matter.
5. The method of feature 4 wherein the media assets are multimedia assets.
6. The method of feature 5 wherein the media assets comprise television programming.
7. The method of feature 4 wherein step (3) comprises:
   providing a search engine for faceted searching for media segments within the ontology.
8. The method of feature 4 wherein step (3) comprises:
   providing a search engine for keyword searching for media segments within the ontology.
9. The method of feature 4 wherein step (3) comprises:
   providing a search engine for combined faceted and keyword searching for media segments within the ontology.
10. The method of feature 4 further comprising the steps of:
   (4) obtaining subject matter information about an advertisement from an advertiser;
   (5) searching the ontology for media segments having a subject matter relevant to the subject matter information of the advertisement; and
   (6) providing the advertiser at least one recommended media segment within which to place the advertisement.
11. The method of feature 10 wherein step (4) comprises:
   (4.1) receiving the advertisement as a media file; and
   (4.2) automatically analyzing the media file to extract subject matter information therefrom.
12. The method of feature 4 wherein step (2) comprises:
   (2.1) determining the subject matter of the media assets at the sub-asset level; and
   (2.2) identifying segments of the media assets that are cohesive as a function of subject matter.
13. The method of feature 12 wherein step (2.1) comprises at least one of analyzing a closed captioning stream within the media assets for subject matter information, analyzing audio within the media assets for non-speech subject matter information, performing speech recognition on the audio within the media assets for subject matter information, performing optical character recognition on the video of the media assets for subject matter information, performing video analytics on video of the media assets for subject matter information, and analyzing metadata within the media assets for subject matter information.
14. The method of feature 12 wherein step (2.1) comprises obtaining external subject matter information about the media assets.
15. A computer program product for facilitating identification of advertising opportunities based on subject matter of media content within media assets at a sub-asset level, the method comprising the steps of:
   (1) computer executable instructions providing an ontology for classifying media according to a subject matter of the media content;
   (2) computer executable instructions for segmenting the media assets into media segments as a function of subject matter and classifying the segments within the ontology; and
   (3) computer executable instructions for enabling advertisers to search the media segments within the ontology for media segments pertaining to a specific subject matter.
16. The computer program product of feature 15 wherein the computer executable instructions for enabling advertisers to search comprises:
   computer executable instructions for enabling faceted searching for media segments within the ontology.
17. The computer program product of feature 15 wherein the computer executable instructions for enabling advertisers to search comprises:
   computer executable instructions for enabling keyword searching for media segments within the ontology.
18. The computer program product of feature 15 wherein the computer executable instructions for enabling advertisers to search comprises:
   computer executable instructions providing a search engine for combined faceted and keyword searching for media segments within the ontology.
19. The computer program product of feature 15 further comprising:
   (4) computer executable instructions for receiving subject matter information about an advertisement from an advertiser;
   (5) computer executable instructions for searching the ontology for media segments having a subject matter relevant to the subject matter of the advertisement; and
   (6) computer executable instructions for providing the advertiser at least one recommended media segment within which to place the advertisement.
20. The method of feature 19 wherein the computer executable instructions for segmenting and classifying comprises computer executable instructions for at least one of analyzing a closed captioning stream within the media assets for subject matter information, analyzing audio within the media assets for non-speech subject matter information, performing speech recognition on the audio within the media assets for subject matter information, performing optical character recognition on the video of the media assets for subject matter information, performing video analytics on video of the multimedia assets for subject matter information, and analyzing metadata within the media assets for subject matter information.
21. A method of offering advertising space within media items comprising the steps of:
   (1) maintaining a database of media items and their corresponding subject matter as classified according to an ontology;
   (2) receiving subject matter information about an advertisement from an advertiser;
   (3) searching the database to identify media items having a subject matter relevant to the subject matter of the advertisement according to the ontology; and
   (4) offering advertising opportunities within the media content identified in step (3).
22. The method of feature 21 wherein step (2) comprises:
   (2.1) receiving the advertisement as a media file; and
   (2.2) automatically analyzing the media file to extract the subject matter information therefrom.
23. The method of feature 22 wherein step (2.2) comprises at least one of analyzing a closed captioning stream within the media file, analyzing audio within the media file for non-speech subject matter information, performing speech recognition on the audio within the media file, performing optical character recognition on the video of the media file, performing video analytics on video of the media file, and analyzing metadata within the media file.
24. The method of feature 21 wherein the media items classified according to the ontology are segments of media at a sub-asset level.
25. A method of identifying advertising opportunities within media items based on subject matter comprising the steps of:
   (1) searching an ontology within which media items are classified by subject matter;
   (2) selecting a media item identified in step (1); and
   (3) purchasing advertising within the selected media item.
26. The method of feature 25 wherein step (1) comprises faceted searching within the ontology.
27. The method of feature 25 wherein step (1) comprises combined faceted and keyword searching for media items within the ontology.

## Claims

1. A method of identifying media segments based on a subject matter of media content of the segments, the method comprising the steps of:
(1) providing an ontology for classifying media according to a subject matter of the media content;
(2) segmenting a media item into media segments as a function of subject matter in accordance with the ontology and classifying the segments within the ontology; and
(3) enabling searching of the media segments within the ontology for media segments pertaining to a specific subject matter.

2. The method of claim 1 further comprising the steps of:
(4) enabling a user to select a media segment identified in step (3); and
(5) enabling association of another media item with the selected media segment,
wherein step (5) may comprise inserting the other media item within the selected media segment.

3. A method of providing advertising opportunities within media assets at a sub-asset level, the method comprising the steps of:
(1) creating an ontology for classifying media according to a subject matter of the media content;
(2) segmenting the media assets into media segments as a function of subject matter in accordance with the ontology and classifying the segments within the ontology; and
(3) enabling advertisers to search the media segments within the ontology for media segments pertaining to a specific subject matter.

4. The method of claim 3 wherein the media assets are multimedia assets and/or comprise television programming.

5. The method of claim 3 or claim 4 wherein step (3) comprises one or more of:
providing a search engine for faceted searching for media segments within the ontology;
providing a search engine for keyword searching for media segments within the ontology;
providing a search engine for combined faceted and keyword searching for media segments within the ontology.

6. The method of any of claims 3 to 5 further comprising the steps of:
(4) obtaining subject matter information about an advertisement from an advertiser;
(5) searching the ontology for media segments having a subject matter relevant to the subject matter information of the advertisement; and
(6) providing the advertiser at least one recommended media segment within which to place the advertisement, wherein
step (4) may comprise:
(4.1) receiving the advertisement as a media file; and
(4.2) automatically analyzing the media file to extract subject matter information therefrom, and wherein
step (2) may further comprise:
(2.1) determining the subject matter of the media assets at the sub-asset level; and
(2.2) identifying segments of the media assets that are cohesive as a function of subject matter, further wherein
step (2.1) may further or alternatively comprise at least one of analyzing a closed captioning stream within the media assets for subject matter information, analyzing audio within the media assets for non-speech subject matter information, performing speech recognition on the audio within the media assets for subject matter information, performing optical character recognition on the video of the media assets for subject matter information, performing video analytics on video of the media assets for subject matter information, and analyzing metadata within the media assets for subject matter information, and further wherein
step (2.1) may comprise obtaining external subject matter information about the media assets.

7. A computer program product for facilitating identification of advertising opportunities based on subject matter of media content within media assets at a sub-asset level, the method comprising the steps of:
(1) computer executable instructions providing an ontology for classifying media according to a subject matter of the media content;
(2) computer executable instructions for segmenting the media assets into media segments as a function of subject matter and classifying the segments within the ontology; and
(3) computer executable instructions for enabling advertisers to search the media segments within the ontology for media segments pertaining to a specific subject matter.

8. The computer program product of claim 7 wherein the computer executable instructions for enabling advertisers to search comprises:
computer executable instructions for enabling faceted searching for media segments within the ontology and/or
wherein the computer executable instructions for enabling advertisers to search comprises:
computer executable instructions for enabling keyword searching for media segments within the ontology and/or
wherein the computer executable instructions for enabling advertisers to search comprises:
computer executable instructions providing a search engine for combined faceted and keyword searching for media segments within the ontology.

9. The computer program product of claim 7 or claim 8 further comprising:
(4) computer executable instructions for receiving subject matter information about an advertisement from an advertiser;
(5) computer executable instructions for searching the ontology for media segments having a subject matter relevant to the subject matter of the advertisement; and
(6) computer executable instructions for providing the advertiser at least one recommended media segment within which to place the advertisement.

10. The method of claim 9 wherein the computer executable instructions for segmenting and classifying comprises computer executable instructions for at least one of analyzing a closed captioning stream within the media assets for subject matter information, analyzing audio within the media assets for non-speech subject matter information, performing speech recognition on the audio within the media assets for subject matter information, performing optical character recognition on the video of the media assets for subject matter information, performing video analytics on video of the multimedia assets for subject matter information, and analyzing metadata within the media assets for subject matter information.

11. A method of offering advertising space within media items comprising the steps of:
(1) maintaining a database of media items and their corresponding subject matter as classified according to an ontology;
(2) receiving subject matter information about an advertisement from an advertiser;
(3) searching the database to identify media items having a subject matter relevant to the subject matter of the advertisement according to the ontology; and
(4) offering advertising opportunities within the media content identified in step (3).

12. The method of claim 1 wherein step (2) comprises:
(2.1) receiving the advertisement as a media file; and
(2.2) automatically analyzing the media file to extract the subject matter information therefrom, wherein
step (2.2) may comprise at least one of analyzing a closed captioning stream within the media file, analyzing audio within the media file for non-speech subject matter information, performing speech recognition on the audio within the media file, performing optical character recognition on the video of the media file, performing video analytics on video of the media file, and analyzing metadata within the media file.

13. The method of claim 11 or claim 12 wherein the media items classified according to the ontology are segments of media at a sub-asset level.

14. A method of identifying advertising opportunities within media items based on subject matter comprising the steps of:
(1) searching an ontology within which media items are classified by subject matter;
(2) selecting a media item identified in step (1); and
(3) purchasing advertising within the selected media item.

15. The method of claim 14 wherein step (1) comprises faceted searching within the ontology and wherein,
step (1) may comprise combined faceted and keyword searching for media items within the ontology.
